# EUROPEAN PATENT APPLICATION

(11) **EP 3 255 126 A1**
(43) Date of publication of application: **13.12.2017**
(21) Application number: 16001297.7
(22) Date of filing: 09.06.2016
(51) Int. Cl.: C10L 3/10, C10L 3/12, B01D 53/047

(54) **METHOD OF PROCESSING A COAL SEAM GAS**

(71) Applicant: Linde Aktiengesellschaft, 80331 München (DE)
(72) Inventor: Peakman, Kevin, Burraneer, NSW 2230 (AU)
(74) Representative: Richmond, Sarah

(57) **Abstract**

The present invention relates to a method of processing a coal seam gas (140), wherein a membrane separation and a pressure swing adsorption of a coal seam gas (140) extracted from a coal seam (101) are conducted, in the course of which a purified coal seam gas (235) is produced, wherein in the course of the membrane separation a first gas component is separated from the coal seam gas (140) and wherein in the course of the pressure swing adsorption a second gas component is separated from the coal seam gas (140).

## Description

The present invention relates to a method of processing a coal seam gas and a coal seam gas processing system.

### Prior art

Methane (CH₄) is formed as part of the process of coal formation ("coalification"). In the course of coalification, methane can be enclosed in coal seams and surrounding rock strata. This methane can be extracted from the coal seams in several different ways.

For example, methane can be extracted from the coal seams in connection with coal mining. During the process of coal mining, for example as a direct result of the physical process of coal extraction, methane can be released into the coal mine. Methane extracted in this manner is often referred to as coal mine methane (CMM).

Methane can also be extracted from coal seams before the actual mining process is conducted as part of a pre-drainage. Such coal seams are potential future coal mines, i.e. coal seams which could or will be mined in the future. Accordingly extracted methane is often referred to as coal bed methane (CBM) or Virgin Coal Bed Methane (VCBM). Moreover, methane can be extracted from coal mines that have been abandoned following the completion of mining operations, referred to as abandoned mine methane (AMM).

The methane is usually extracted for safety reasons from coal mines or future coal mines, since methane is extremely flammable and forms explosive mixtures with air. The extracted methane can usually be destroyed, e.g. flared. By flaring, the methane can be disposed and prevented from being released directly into the atmosphere, thus reducing greenhouse gas emissions.

This way, however, large amounts of methane are wasted and cannot be used effectively. Thus, it is desirable, to provide a possibility of processing methane derived from coal seams.

### Disclosure of the invention

The invention relates to a method of processing a coal seam gas and a coal seam gas processing system with the features of the independent claims. Further advantages and embodiments of the invention will become apparent from the description and the appended figures.

The coal seam gas processing system is especially adapted to conduct the method according to the invention. Advantages and embodiments of this method and the coal seam gas processing system according to the invention arise from the following description in an analogous manner.

According to the invention, a membrane separation and a pressure swing adsorption of a coal seam gas derived from a coal mine are conducted, in the course of which a purified coal seam gas is produced.

As mentioned, gas, particularly methane, is enclosed in coal seams or surrounding rock strata as part of the process of coal formation ("coalification"). This gas can be extracted from the coal seams especially in the course of coal mining. During the process of coal mining, especially as a direct result of the physical process of coal extraction, gas is released into the coal mine. This extracted gas, especially in mixture with air, is especially conducted out of the coal mine as coal seam gas. Gas enclosed in coal seams can also be extracted as coal seam gas before an actual mining process is conducted (as part of a pre-drainage) or from abandoned coal mines.

In this context the term coal seam gas should especially be understood to comprise a gas or mixture of gases, respectively, which is/are conducted out of a coal seam. The coal seam gas is especially extracted from a coal mine, either from an actively operated coal mine, or an abandoned coal mine, or a potential or future coal mine, i.e. a coal seam which could or will be mined in the future. Particularly, a mixture of methane and air is derived as coal seam gas.

Components of this coal seam gas, especially methane or natural gas, can be utilised e.g. for power generation. Since coal seam gas usually has a high portion of air and/or possibly other components, these components are expediently separated from the coal seam gas before it is utilised. For this purpose, the coal seam gas, which is extracted from a coal seam, is transferred to the coal seam gas processing system. The coal seam gas is purified and the purified coal seam gas, especially methane or natural gas, respectively, is produced.

In the course of membrane separation, a first gas component is separated from the coal seam gas. In the course of pressure swing adsorption, a second gas component is separated from the coal seam gas. It should be understood that a specific gas or a mixture of several specific gases can be separated from the coal seam gas as first gas component or second gas component, respectively.

The coal seam gas processing system comprise at least one membrane separation unit adapted to separate the first gas component from the coal seam gas. The membrane separation unit comprises one or a plurality synthetic membranes. By the use of specific membranes, e.g. comprising pores and/or minute gaps in the molecular arrangement of a continuous structure, components of the coal seam gas can selectively be separated. The membranes can for example be made of polymers, for example polyethylene, polyamide, polyimide, cellulose acetate, polysulphone, and/or polydimethylsiloxa, or can also be made or ceramic materials. Preferably, CO₂ and/or H₂S are separated from the coal seam gas as first gas component in the course of the membrane separation. Particularly polyamide membranes can be used for this purpose.

The coal seam gas processing system moreover comprises at least one pressure swing adsorption unit adapted to separate the second gas component from the coal seam gas. The pressure swing adsorption unit especially comprises several adsorption vessels that are packed with specific adsorptive materials, e.g., zeolites, activated carbon, and/or molecular sieves.

Pressure swing adsorption makes use of the fact that gases are adsorbed under high pressure. When the pressure is reduced, the previously adsorbed gas is desorbed. Pressure swing adsorption is based on a physical binding of specific gas molecules to specific adsorbent materials. The respective force acting between the specific gas molecules and the specific adsorbent material depends on the gas component, type of adsorbent material, partial pressure of the gas component and operating temperature. In the course of the pressure swing adsorption specific components of the coal seam gas can be separated according to the molecular characteristics and affinity for specific adsorbent materials of the corresponding components.

Thus, by use of specific adsorbent materials and by specific pressures for the coal seam gas, specific gas components are selectively extracted from the coal seam gas as second gas components. Preferably O₂, N₂, and/or CO₂ are separated from the coal seam gas as second gas components. For example carbon molecular sieves (CMS) can be used to separate residual moisture, CO₂ and/or O₂.

According to the invention, it is not necessary to dispose of the coal seam gas extracted from coal seams e.g. by flaring, in order to prevent it from being released into the atmosphere. Instead, the derived coal seam gas can be processed in-situ and purified and can thus be prepared for further utilisation. Impurities such as O₂, N₂, CO₂, and H₂S can be extracted from the coal seam gas. The coal seam gas is not wasted. The gas processing system can easily and cost-efficiently be installed at coal seam sites. Particularly, if a methane-air-mixture is extracted as coal seam gas, impurities can be separated in order to produce purified methane or natural gas, respectively.

The method of processing the coal seam gas is particularly automatised and designed for unattended operation. The process and the coal seam gas processing system can especially be flexibly adjusted to changes or variations in the extracted coal seam gas, especially to changes in its composition, and to changes in the feed rate, according to which the extracted coal seam gas is conducted to the coal seam gas processing system. Moreover, process and system can be particularly be adjusted to changing predetermined purity requirements of the purified coal seam gas.

Furthermore, the coal seam gas processing system can preferably comprise buffer tanks or surge tanks. These tanks can especially be used to dampen fluctuations in flow rate, composition or temperature or the coal seam gas. They can also allow single units of the coal seam gas processing system to be shut down for maintenance without shutting down the entire coal seam gas processing system.

Advantageously, a liquid separation of the coal seam gas is conducted, in the course of which a liquid, particularly water, is removed from the coal seam gas. For this purpose the coal seam gas processing system preferably comprises at least one liquid separation unit. The liquid separation unit can particularly also be referred to as a gas-liquid separator, flash drum, knock-out drum, knock-out pot, compressor suction drum or compressor inlet drum. The liquid separation unit especially comprises one or more vessels, through which the coal seam gas is conducted. The liquid can settle at the bottom of a vessel, where it can be extracted out of the vessel.

According to a preferred embodiment of the invention, the purified coal seam gas is liquefied. Preferably, methane or natural gas is produced as purified coal seam gas. In this case, advantageously liquefied natural gas (LNG) is produced in the course of the liquefaction of the purified coal seam gas. For this purpose, the coal seam gas processing system preferably comprises a gas liquefaction unit. The corresponding gas liquefaction unit especially comprises one or several heat exchangers, especially plate-fin heat exchangers (PFHE) and/or coil-wound heat exchangers (CWHE). It is also possible to conduct an expander-based liquefaction processes.

The liquefaction can especially be conducted by means of a so called single mixed refrigerant liquefaction process or multi-stage mixed refrigerant process applying a plate-fin heat exchanger. In the course of this process, a mixed refrigerant (MR) is compressed especially in a multi-stage compressor and is especially partially condensed against cooling water or air. Both phases of the compressed mixed refrigerant can especially jointly be fed to a plate-fin heat exchanger. After expansion the mixed refrigerant provides refrigeration for liquefaction of the coal seam gas. Particularly nitrogen, methane, ethylene, ethane, and/or butane can be used as mixed refrigerant.

Alternatively or additionally, a so called single mixed refrigerant liquefaction process or multi-stage mixed refrigerant process applying a coil-wound heat exchanger can especially be conducted to liquefy the coal seam gas. A mixed refrigerant is compressed especially in a multi-stage compressor and particularly partially condensed. The heavy, liquid mixed refrigerant fraction is especially used in the coil-wound heat exchanger to pre-cool the coal seam gas and to partially condense the light, gaseous mixed refrigerant fraction. The resulting, intermediately boiling mixed refrigerant fraction especially serves as liquefaction refrigerant, while the remaining mixed refrigerant fraction can be used to sub-cool the liquefied coal seam gas.

Natural gas or liquefied natural gas (LNG) are becoming more and more important in power generation and power supply and are expected to gain even more in importance in the near future. Natural gas is considered as a comparatively environmentally friendly energy carrier, since it is significantly cleaner-burning than oil and coal. For example, it generates almost 20% less CO₂ than crude oil and nearly 45% less CO₂ than coal (when combusted). It also produces virtually no SO₂ emissions, less NOx emissions and less solid particle emissions than other fuels. Natural gas or liquefied natural gas, respectively, can for example be used for power generation or as fuel for transport vehicles or ships in a convenient and cost-efficient way.

The higher energy density of LNG is moreover an advantage over gaseous natural gas. When natural gas is liquefied by cooling it down to approximately -161°C, it contracts to about 1/600th of its original volume. As a result, LNG can be stored with minimum space requirements and can easily be transported. There is especially no need for pipelines or a grid network in order to transport LNG. LNG can for example be transported via trucks or cargo ships. The coal seam gas processing system can especially comprise LNG storage tanks and for example an LNG truck and/or ship filling station.

By means of the gas liquefaction unit of the coal seam gas processing system, the coal seam gas can be liquefied in-situ at the corresponding coal seam site. It is particularly possible to process the extracted coal seam gas in-situ in order to produce LNG. Thus, methane or natural gas extracted from coal seams is not unnecessarily wasted, e.g. by flaring.

Moreover, it is not necessary to transfer extracted coal seam gas from coal seam sites to far-off plants, in order to produce LNG. The coal seam gas extracted from coal mines or future/potential coal mines can easily, effectively and cost-efficiently be processed into liquefied natural gas in-situ at the very coal seam sites. LNG can be cost-effectively produced even at far-off coal seam sites in remote regions with little or no grid or pipeline connection. The produced LNG can easily be transported to locations, where it can be used for power generation or as fuel.

According to a particularly advantageous embodiment of the invention, a micro scale natural gas liquefaction (MSLNG) or small-scale natural gas liquefaction (SSLNG) is conducted. For this purpose, the coal seam gas processing system preferably comprises at least one micro or small-scale LNG plant. In the course of micro or small-scale natural gas liquefaction, LNG is produced with a capacity of approximately 1 million tons per year at most or approximately 3000 tons per day at most, respectively, and particularly with capacities between 15 tonnes per day and 50 tonnes per day for micro scale and 100 tons per day and 600 tons per day for small-scale.

Micro and small-scale natural gas liquefaction can easily be constructed, implemented, and installed at corresponding coal seam locations. Micro and small-scale LNG plants can especially be designed in a modularised and standardised manner. Thus, the specific design of a micro or small-scale LNG plant can easily be adapted to predetermined requirements of the corresponding coal seam site. Micro and small-scale LNG can for example be skid-mounted and a plug and play design can be provided. Short delivery times, low installation costs and minimum on-site construction effort can be accomplished.

According to a preferred embodiment, the membrane separation unit(s), the pressure swing adsorption unit(s), the liquid separation unit(s) and/or the gas liquefaction unit(s) are arranged inside a skid. The skid is especially constructed as a frame or framework, respectively. The skid can be constructed of bars or beams, especially made of steel or metal. Moreover, especially fluid elements like valves and pipes connecting the different units are also arranged inside the skid. The coal seam gas processing system is particularly modularised. Different units can flexibly be added to or removed from the coal seam gas processing system. Particularly, variable numbers of membrane separation units and pressure swing adsorption units can be arranged inside the skid. Thus, the coal seam gas processing system can easily be adapted to the specifications of the corresponding coal seam site. According to a particularly advantageous embodiment, the at least one membrane separation unit and the at least one pressure swing adsorption unit are arranged inside a skid. This skid is preferably connected to the at least one gas liquefaction unit and the at least one liquid separation unit.

According to an advantageous embodiment of the invention, pre-drainage gas, coal mine methane, ventilation air methane, gob gas, and/or abandoned mine methane derived from a coal seam are purified as coal seam gas.

As mentioned, methane is especially released as a direct result of the physical process of coal extraction. In modern underground mines, coal can for example be extracted through longwall mining. Longwall mining, as with other sub-surface techniques, especially releases methane trapped within the coal seam into the air supply of the mine as layers of the coal face are removed.

Methane released from the worked coal face according to this way can especially be diluted and removed by a ventilation system. This ventilation system can especially be designed to move vast quantities of air through the mine. The methane is particularly diluted to concentrations below the lower explosive limit of 5-15%, particularly to a concentration below 1%. The diluted methane or the corresponding air-methane-mixture, respectively, can be conducted by the ventilation system out of working areas of the coal mine into shafts leading to the surface as the coal seam gas. This air-methane-mixture removed out of the coal mine is also referred to as ventilation air methane (VAM). Ventilation air methane can have concentrations of methane in the range between 0.05% and 0.8%.

Also, methane emissions out of coal seams especially arise from the collapse of surrounding rock strata. For example, after a section of the coal seam has been mined, the artificial roof and wall supports can be removed as mining progresses to another section. The debris resulting from the collapse is known as gob. This gob also releases methane often referred to as "gob gas" into the mine.

In order to pre-empt the release of gob gas from post mining collapse, vertical gob wells can be drilled into the coal seam's surrounding strata before mining activities pass through that section. These pre-drilled vertical gob wells can remove the gob gas once the collapse takes place, thus avoiding the release of methane directly into the mine. The gob gas can be conducted out of the coal mine via the vertical gob wells as the coal seam gas. By this method, gob gas is exposed to significantly lower volumes of air than ventilation air methane. Thus, gob gas can have a methane concentration in the range between 35% and 75%.

Methane trapped within the coal seam can also be extracted prior to the actual commencement of mining operations in the course of a pre-drainage. For this purpose, boreholes can be drilled into the coal seam from the surface and/or from underground. Methane or a mixture of methane and other gases can be extracted from the coal seam as so called pre-drainage gas or coal bed methane (CBM) or Virgin Coal Bed Methane (VCBM). A pre-drainage can be conducted several years in advance prior to mining a coal seam. The coal seam can in this case be considered as a potential or future coal mine. So called Virgin Coal Bed Methane (VCBM) is extracted from coal seams, in which the coal will remain unmined.

By pre-drainage especially up to 90% of the methane enclosed in the coal seam can be captured. Pre-drainage can drastically reduces gas flow from worked coal seams, which is important in reducing outburst risk, reducing downtime and lowering ventilation costs. Pre-drainage gas can have a methane concentration of up to 90%.

Moreover, after coal mines have been abandoned following the completion of mining operations, significant amounts of methane can remain trapped in the mine. As mentioned, methane extracted from abandoned coal mines is also referred to as abandoned mine methane (AMM). Abandoned coal mines can for example be sealed, wherein any entrances into the mine (e.g. ventilation shafts, methane drainage wells) have been sealed. Methane trapped inside a sealed coal mine can be recovered by drilling wells or boreholes analogously to the pre-drainage. Thus, gob gas from post mining collapses can for example be extracted from the abandoned mine. Furthermore, pre-existing ventilation shafts can be used to extract methane, similar to extracting ventilation air methane from actively operated coal mines.

It should be noted that the previously mentioned features and the features to be further described in the following are usable not only in the respectively indicated combination, but also in further combinations or taken alone, without departing from the scope of the present invention.

The present invention will now be described further, by way of example, with reference to the accompanying drawings, in which
- FIG. 1: schematically shows a preferred embodiment of a coal seam gas processing system according to the invention, adapted to conduct a preferred embodiment of a method according to the invention.
- FIG. 2: schematically shows a preferred embodiment of a method according to the invention as a block diagram.

### Detailed description

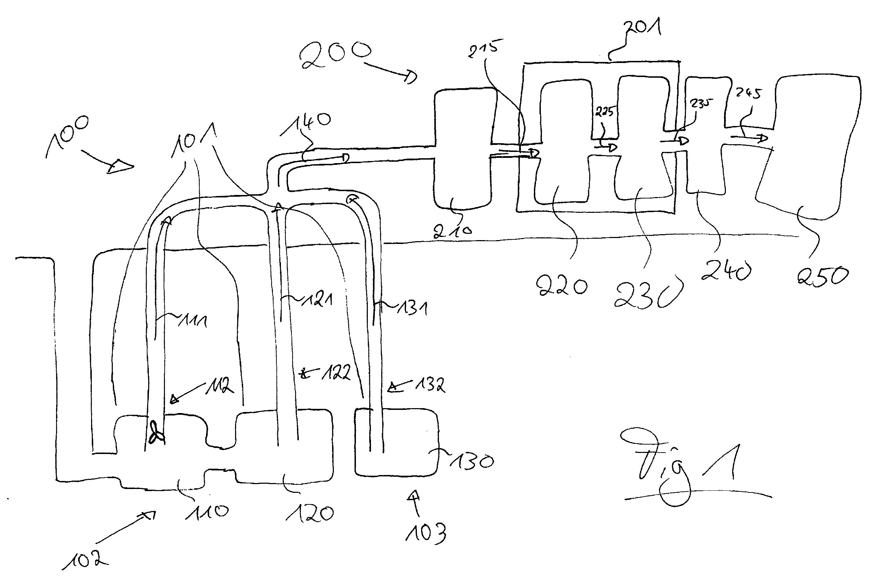

In FIG. 1 a preferred embodiment of a coal seam gas processing system 200 is schematically shown. The coal seam gas processing system 200 is located at a coal seam site 100. At the coal seam site 100, a coal seam gas 140 is extracted from coal seams 101.

Be it assumed that coal is mined in an actively operated coal mine 102. In a section 110 of the coal mine 102, coal is extracted from the coal seams 101. As a result of this coal extraction, methane is released from coal seams 101 into the coal mine 102. By a ventilation system 112 the methane is diluted and a methane-air-mixture is extracted from the coal mine 102, referred to as ventilation air methane 111.

Be it also assumed that a section 120 of the coal mine 102 has been previously mined, but is not mined actively any more. An artificial roof and wall supports of this section 120 were removed as mining progresses to section 110. This typically leads to a collapse of the mine in this section 120. The debris resulting from the collapse ("gob") releases a so called "gob gas" into the mine 102. Vertical gob wells 122 have been drilled into the coal seam's surrounding strata before mining activities passed through this section 120. By means of these pre-drilled vertical gob wells 122 the gob gas 121 is extracted once the collapse of section 120 has taken place.

Be it also assumed that an unmined section 130 of the coal seam site shall be mined in the future. This section 130 is considered to be a potential coal mine 103. In the course of a pre-drainage, boreholes 132 are drilled into the coal seam 101 from the surface. A mixture of methane and other gases is extracted from the coal seam 101 of section 130 through the boreholes 132 as so called pre-drainage gas or coal bed methane (CBM) 131.

Ventilation air methane 111, gob gas 121 and/or pre-drainage gas 131 can be extracted from the coal seam 101 as coal seam gas 140. Ventilation air methane 111 has concentrations of methane in the range especially between 0.05% and 0.8%. Gob gas 121 has a methane concentration particularly in the range between 35% and 75%. Pre-drainage gas 131 has a methane concentration particularly up to 90%.

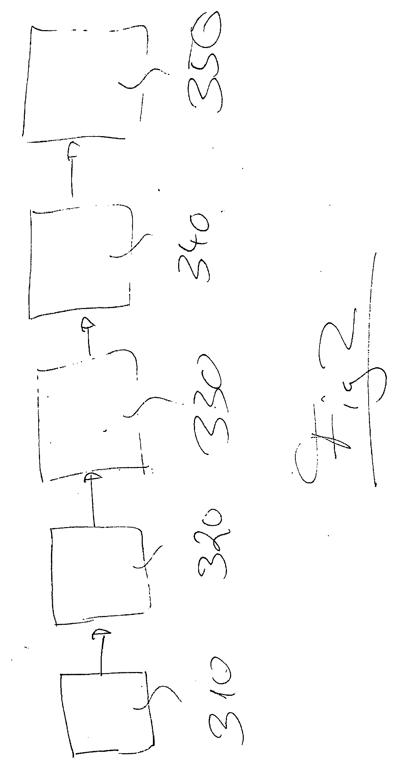

The coal seam gas 140 is conducted to the coal seam gas processing system 200, in which it is processed and purified. The coal seam gas processing system 200 is adapted to conduct a preferred embodiment of a method according to the invention, which is schematically shown in FIG. 2 as a block diagram. FIG. 1 and FIG. 2 will hereafter be described collectively.

In the course of the coal seam gas processing, purified coal seam gas, preferably purified methane 235 is produced and liquefied, in the course of which liquefied natural gas (LNG) 245 is produced.

In a first step 310 the coal seam gas 140 extracted from the coal seam 101 is conducted to a liquid separation unit 210, especially constructed as a knock-out pot, and a liquid separation of the coal seam gas 140 is conducted. In the liquid separation unit 210, water is removed from the coal seam gas.

In step 320 the dehydrated coal seam gas 215 is conducted to a membrane separation unit 220 and a membrane separation is conducted, in the course of which a first gas component is separated from the dehydrated coal seam gas 215. The membrane separation unit 220 especially comprises several synthetic membranes, in order to selectively separate CO₂ and H₂S from the dehydrated coal seam gas 215 as first gas component.

In step 330 the membrane separated coal seam gas 225 is conducted to a pressure swing adsorption unit 230 and a pressure swing adsorption is conducted, in the course of which a second gas component is separated from the membrane separated coal seam gas 225. The pressure swing adsorption unit 230 comprises vessels with specific adsorbent materials. The membrane separated coal seam gas 225 is conducted through the vessels with specific pressures. Thus, O₂, N₂, and CO₂ are selectively extracted from the membrane separated coal seam gas 225.

After the coal seam gas 140 is dehydrated and after the first and second gas components are separated from the coal seam gas 140, particularly purified methane or purified natural gas 235, respectively, is obtained.

In step 340 the purified methane 235 is conducted to a gas liquefaction unit 240 and a liquefaction of the methane 235 is conducted, in the course of which liquefied natural gas (LNG) 245 is produced. The gas liquefaction unit 240 is preferably constructed as a micro or small-scale LNG plant. The micro or small-scale LNG plant 240 can comprise plate-fin heat exchangers (PFHE) and/or coil-wound heat exchangers (CWHE). By means of the micro or small-scale LNG plant 240 LNG 245 is produced with a capacity of particularly 3000 tons per day at most, preferably with capacities between 15 tonnes per day to 50 tonnes per day for micro scale LNG plant and 100 tons per day and 600 tons per day for small-scale LNG plant.

In step 350 the LNG 245 is conducted to a storage and filling unit 250. In this unit 250, the produced LNG 245 can be stored in storage tanks and can be filled into trucks and/or ships in order to dispatch the LNG.

The membrane separation unit 220 and the pressure swing adsorption unit 230 are preferably arranged inside a skid 201. The skid 201 is connected with the knock-out pot 210 and the gas liquefaction unit 240. Thus, a modularisation and standardisation of the coal seam gas processing system 200 can be achieved.

### Reference list

- 100: coal seam site
- 101: coal seams
- 102: coal mine
- 103: potential coal mine
- 110: section of the coal mine
- 111: ventilation air methane
- 112: ventilation system
- 120: section of the coal mine
- 121: gob gas
- 122: gob wells
- 130: unmined section of the coal seam site
- 131: pre-drainage gas, coal bed methane (CBM)
- 132: boreholes
- 140: coal seam gas

- 200: coal seam gas processing system
- 201: skid
- 210: liquid separation unit, knock-out pot
- 215: dehydrated coal seam gas
- 220: membrane separation unit
- 225: membrane separated coal seam gas
- 230: pressure swing adsorption unit
- 235: methane, natural gas
- 240: gas liquefaction unit, micro or small-scale LNG plant
- 245: liquefied natural gas (LNG)
- 250: storage and filling unit

- 310 to 350: steps of the method

## Claims

1. Method of processing a coal seam gas (140),
- wherein a membrane separation and a pressure swing adsorption of a coal seam gas (140) extracted from a coal seam (101) are conducted (320, 330), in the course of which a purified coal seam gas (235) is produced,
- wherein in the course of the membrane separation a first gas component is separated from the coal seam gas (140, 320) and
- wherein in the course of the pressure swing adsorption a second gas component is separated from the coal seam gas (140, 330).

2. Method according to claim 1, wherein furthermore a liquid separation of the coal seam gas (140) is conducted (310), in the course of which a liquid is removed from the coal seam gas (140).

3. Method according to claim 1 or 2, wherein the purified coal seam (235) gas is liquefied (340), and wherein especially liquefied natural gas (245) is produced.

4. Method according to claim 3, wherein a micro or small-scale natural gas liquefaction is conducted (340).

5. Method according to any one of the preceding claims, wherein in the course of the membrane separation CO₂ and/or H₂S are separated from the coal seam gas (140) as first gas component (320).

6. Method according to any one of the preceding claims, wherein in the course of the pressure swing adsorption O₂, N₂, and/or CO₂ are separated from the coal seam gas (140) as second gas component (330).

7. Method according to any one of the preceding claims, wherein pre-drainage gas (131), coal mine methane, ventilation air methane (111), gob gas (121), and/or abandoned mine methane derived from a coal seam (101) are purified as coal seam gas (140).

8. Method according to any one of the preceding claims, wherein methane or natural gas is produced as the purified coal seam gas (235).

9. Coal seam gas processing system (200), adapted to purify a coal seam gas (140) derived from a coal seam (101), comprising:
- at least one membrane separation unit (220) adapted to separate a first gas component from the coal seam gas (140) and
- at least one pressure swing adsorption (230) unit adapted to separate a second gas component from the coal seam gas (140).

10. Coal seam gas processing system (200) according to claim 9, further comprising at least one liquid separation unit (210) adapted to remove a liquid from the coal seam gas (140).

11. Coal seam gas processing system (200) according to claim 9 or 10, further comprising at least one gas liquefaction unit (240), especially at least one micro or small-scale LNG plant.

12. Coal seam gas processing system (200) according to any one of claims 9 to 11, wherein the at least one membrane separation unit (220), the at least one pressure swing adsorption unit (230), the at least one liquid separation unit (210) and/or the at least one gas liquefaction unit (240) are arranged inside a skid (201).
